# EUROPÄISCHE PATENTSCHRIFT

(11) **EP 2 048 384 B1**
(45) Veröffentlichungstag und Bekanntmachung des Hinweises auf die Patenterteilung: **18.12.2013**
(21) Anmeldenummer: 08017894.0
(22) Anmeldetag: 13.10.2008
(51) Int. Cl.: F16B 35/04, F16B 33/00, F16B 41/00

(54) **Montageanordnung mit elastischem Ring**
Assembly arrangement with elastic ring
Ensemble de montage doté d'un anneau élastique

(30) Priorität: 12.10.2007 DE 202007014325 U
(43) Veröffentlichungstag der Anmeldung: 15.04.2009
(73) Patentinhaber: Knipping Verbindungstechnik GmbH, 58566 Kierspe (DE); MAHLE Filtersysteme GmbH, 70376 Stuttgart (DE)
(72) Erfinder: Hofmann, Frank, 74594 Kressberg (DE); Schomaker, Christian, 51643 Gummersbach (DE)
(74) Vertreter: Schneiders, Josef

(56) Entgegenhaltungen:
- DE-A1- 4 131 779
- DE-A1-102007 008 372
- DE-U1- 29 623 736
- JP-U- 53 075 503

## Beschreibung

Die Erfindung betrifft eine Montageanordnung, umfassend eine in ein Montageteil einsetzbare Hülse, einen elastischen Ring und eine einen Kopf und einen Schaft aufweisende Schraube, welche mit ihrem Schaft bis zum Aufliegen der Auflagefläche des Kopfes in die Hülse einführbar ist, wobei der Schaft der Schraube mit mindestens einem Gewinde und mit mindestens einer Ringnut versehen ist, in welche der Ring einsetzbar ist, und wobei der Außendurchmesser des in die Ringnut eingesetzten Rings sowohl den Schaftdurchmesser der Schraube überschreitet als auch den Kopfdurchmesser der Schraube unterschreitet, wobei die Hülse eine Ringzone aufweist, deren Hülseninnendurchmesser an der Grenze zur Ringzone sowohl den Außendurchmesser des in die Ringnut eingesetzten Rings unterschreitet, als auch den Schaftdurchmesser überschreitet.

Bekannt ist eine solche Montageanordnung aus der DE 20 2006 007 952 U1.

Bei der hoch automatisierten Montage von Baugruppen, wie beispielsweise in der Automobilindustrie, ist man weitestgehend dazu übergegangen, die an der Fügestelle zu montierenden Montageteile zusammen mit den zugehörigen, in das Montageteil eingeführten Schrauben an die Fügestelle zu fördern und dort in das Fügeteil einzuschrauben. So ist es beispielsweise bei der Automobilmontage bekannt, dass der Zulieferer eines an dem Zylinderkopf festzuschraubenden Zusatzaggregates dieses zusammen mit den Schrauben in die Endmontage des Motors liefert. Dort buchsiert ein Roboter das Aggregat zusammen mit den zugehörigen Schrauben an die bestimmungsgemäße Fügestelle am Zylinderkopf des Motors und verschraubt es dort. Ein gesondertes Zuführen der Schrauben und ein Einfädeln in die Durchgangslöcher des Aggregates ist nicht mehr erforderlich. Ebenso entfällt die gesonderte Lagerhaltung für die Schrauben, da diese aus Sicht des Motorenherstellers eine mit den Aggregat zusammenhängende Baugruppe bilden.

Beim Zuführen des Montageteils an die Fügestelle müssen die Schrauben unverlierbar in dem Montageteil gehalten werden, damit sie zum Fügezeitpunkt parat sind. Hierzu können Engstellen in den Durchgangslöchern der Montageteile vorgesehen werden. Diese umgreifen den Schaft der Schraube zwischen Gewinde und Kopf und begrenzen damit großzügig die axiale Beweglichkeit der Schraube im Durchgangsloch des Montageteils, um ein Herausrutschen der Schraube auf dem Montageteil zu verhindern. Dies erfordert eine genaue Abstimmung der Innengeometrie der Durchgangslöcher des Montageteils mit der Außengeometrie der Schraube. Die Abstimmung der Verliersicherung liegt im Kompetenzbereich des Schraubenherstellers. Um den Hersteller des Montageteils hiervon zu entlasten, wurden Schrauben/Hülsen-Kombinationen entwickelt, die eine Schraube umfassen, die unverlierbar in einer Hülse gehalten ist. Die Schrauben/Hülsen-Kombination stellt aus Sicht des Herstellers des Montageteils ein Zulieferteil da. Die Hülse mit eingesteckter Schraube wird in einer Aufnahmebohrung des Montageteils eingepresst, so dass die Schraube im Montageteil unverlierbar gehalten ist. Der Hersteller des Montageteils braucht somit keine Maßnahmen zur Fertigung der Verliersicherung zu veranlassen, er muss lediglich eine zylindrische Aufnahmebohrung für die Hülse vorsehen.

In einigen Montagesituationen ist es erforderlich, dass die Schrauben sich nicht nur verliersicher in Montageteilen befinden, sondern auch eine definierte Position zu diesen einnehmen. So ist es häufig erforderlich, dass das Gewinde der Schraube im vormontierten Zustand - also dann, wenn das Montageteile auf der Fügestelle positioniert wird - nicht über die Trennfuge zwischen Montageteil und Fügestelle hinaus steht. Wenn das Montageteil beispielsweise aufgrund verengter Platzverhältnisse parallel zur Trennfuge in Richtung der Fügestelle transportiert werden muss, könnte ein aus dem Montageteil hervorstehendes Gewinde die Oberfläche des Fügeteils zerkratzen oder mit Vorsprüngen des Fügeteils kollidieren und damit den automatisierten Montageablauf blockieren.

Wenn das Montageteil bei der Zuführung sogar über Kopf gedreht werden muss, ist der lineare Freiheitsgrad der Schraube innerhalb der Hülse sogar in zwei Richtungen einzuschränken. Ein Beispiel für eine Montageanordnung, bei der die axiale Beweglichkeit der Schraube innerhalb der Hülse im vormontierten Zustand in zwei Richtungen eingeschränkt ist, zeigt die DE 20 2006 007 952 U1.

Ein Kernstück dieser Montageanordnung ist ein elastischer Ring, der im vormontierten Zustand radial mit der Hülse verklemmt ist. Im verklemmten Zustand (Figuren 4, 9 und 11 der zitierten Druckschrift) herrscht über den Ring eine kraftschlüssige Verbindung zwischen Hülse und Schraube, welche die axiale Beweglichkeit der Schraube innerhalb der Hülse ausschließt. Die Schraube geht daher beim Zuführen nicht verloren und hält ihre Position relativ zum Montageteil ein. Das Verspannen des Rings erfolgt entweder durch eine radiale Aufweitung infolge einer Durchmesseraufweitung an der Schraube oder durch eine radiale Einschnürung mittels einer Verengung an der Hülse.

Obwohl der Ring bei der vorbekannten Montageanordnung im vormontierten Zustand stark verpresst ist, erlaubt diese Montageanordnung einen so genannten Toleranzausgleich. Damit ist eine gewisse, nicht axiale Beweglichkeit der Schraube relativ zur Hülse im vormontierten Zustand gemeint, der es der Schraube ermöglicht, ihr Loch zu finden. So ist es aufgrund von Fertigungs- oder Handlingungenauigkeiten nicht immer möglich, das Montageteil so zum Fügeteil zu positionieren, dass die Schraubenachse koaxial zur Gewindeachse des Fügeteils ausgerichtet ist. Diese Ungenauigkeit muss der Toleranzausgleich kompensieren.

Der Nachteil der aus der DE 20 2006 007 952 bekannten Montageanordnung besteht darin, dass sich ihr Toleranzausgleich in der Winkelausrichtung der Längsachse der Schraube relativ zur Längsachse der Hülse erschöpft. In einigen Montagesituationen ist nämlich auch ein Toleranzausgleich erforderlich, der einen parallelen Versatz von Schrauben- und Hülsenachse erlaubt. Ein paralleler Versatz von Schraube und Hülse ist bei der bekannten Lösung im vormontierten Zustand prinzipbedingt nicht möglich.

Eine weitere Montageanordnung der genannten Art ist aus der DE 10 2007 008 372 bekannt.

Diese beschreibt eine Montageeinheit mit einer wenigstens eine Durchgangsöffnung aufweisenden Hülse und wenigstens einer Schraube. Die Schraube hat einen radial verbreiterten Kopf und einen mit einem Fixierabschnitt versehenen, die Durchgangsöffnung durchgreifenden und verliersicher darin gehaltenen Schaft. Ein erfindungskennzeichnendes Merkmal des Schafts ist ein radial abstehender und einen Axialabstand zum Kopf aufweisender Ring. Dieser Ring ist ein separates, axialfestes am Schaft angeordnetes Glied und derart elastisch verformbar, dass er bei einer Beaufschlagung der Schraube mit einer zum Fixierabschnitt gerichteten Axialkraft an der Hülse vorbei bewegbar ist, wobei auch in der Vormontageposition der Schaft der Schraube verliersicher in der Durchgangsöffnung gehalten ist.

Der Vorteil aus der DE 10 2007 008 372 liegt darin, dass das Anschlagelement innerhalb der Hülse formschlüssig radial gesichert ist. Dies ermöglicht eine gute Radial-Positionierung hinsichtlich des Montagevorgangs. Die flexible Ausgestaltung des Rings erweitert den Rahmen des Toleranzintervalls für die Montage.

Der Nachteil aus der DE 10 2007 008 372 liegt darin, dass im montierten Zustand keine axiale Sicherung des Rings innerhalb der Hülse vorhanden ist. Der Ring hat somit nach der Montage keine weitere Funktion.

Ausgehend von diesem Stand der Technik liegt der Erfindung die Aufgabe zugrunde, eine Montageanordnung anzugeben, die im vormontierten Zustand eine axiale Beweglichkeit der Schraube relativ zur Hülse ausschließt, die einen Toleranzausgleich im Sinne einer Winkelabweichung zwischen Schrauben- und Hülsenachse zulässt, die darüber hinaus noch einen Toleranzausgleich im Sinne eines parallelen Versatzes der Längsachse der Schraube relativ zur Längsachse erlaubt und bei der dem Ring sowohl im vormontierten als auch im montierten Zustand eine verbindungsstärkende Funktion zukommt.

Gelöst wird diese Aufgabe durch eine Montageanordnung der eingangs genannten Gattung, in der zusätzlich innerhalb der Hülse mindestens zwei, in Axialrichtung beidseitig begrenzte Ringzonen symmetrisch vorgesehen sind, deren Durchmesser den Außendurchmesser des in die Ringnut eingesetzten Rings überschreitet.

Eine erfindungskennzeichnende Ausführungsform der Hülse sieht vor, innerhalb dieser zwei Ringzonen symmetrisch vorzusehen. Durch die symmetrische Anordnung zweier Ringzonen wird die Zuführung der leeren Hülse in das Montageteil vereinfacht, da die Hülse stets richtig positioniert ist. Dadurch wird ausgeschlossen, dass die Hülse verkehrt herum in das Montageteil eingeschlagen wird. Außerdem befindet sich der Ring im vormontierten Zustand innerhalb der Ringnut der Hülse. Da dieser einen größeren Durchmesser aufweist, als der Außendurchmesser des in die Ringnut eingesetzten Rings, wird dieser nicht radial mit der Hülse verquetscht, weswegen ein paralleler Versatz der Schraubenachse zur Hülsenachse im Rahmen des Toleranzausgleichs gestattet ist. Um nach Wegfall der radialen Verquetschung weiterhin die axiale Position der Schraube in der Hülse zu limitieren, sind die Ringzonen in Axialrichtung beidseitig begrenzt, nämlich dadurch, dass der Hülseninnendurchmesser an der Grenze zu den Ringzonen den Außendurchmesser des in die Ringnut eingesetzten Rings unterschreitet. Der parallele Versatz zwischen Schrauben- und Hülsenachse entspricht der halben Differenz von Hülseninnendurchmesser und Schaftdurchmesser.

Da entsprechend der Erfindung zwei Ringzonen vorgesehen werden empfiehlt es sich, den axialen Abstand des Zentrums einer jenen Ringzone zum entfernten Ende der Hülse so zu bemessen, dass er dem axialen Abstand des Zentrums der Ringnut zur Auflagefläche des Kopfes entspricht. Diese Dimensionierung bewirkt, dass sich der Ring in dem Augenblick wieder in einer Ringzone befindet, in den der Kopf während des Einschraubvorgangs am Ende der Hülse anliegt. Ab diesem Zeitpunkt wird nämlich die Hülse und die Schraube elastisch vorgespannt, wodurch das Einschraubmoment stark ansteigt. Wenn sich zu diesem Zeitpunkt der Ring noch außerhalb der Grenzen der Ringzone oder einer etwaigen Laufzone befindet, also dort, wo der Hülseninnendurchmesser enger ist als der Außendurchmesser des Rings, besteht für den Ring Quetsch- oder Walkgefahr, die zu Beschädigungen führen kann. Bei einer späteren Demotage der Einheit könnten dann Reste des zerstörten Rings in die Schraubbohrung des Fügeteils fallen und dies verschmutzen. Außerdem müsste in Ermangelung eines intakten Rings bei der Remontage auf den Komfort einer unverlierbar vormontierten Schraube verzichtet werde. Dies alles wird entweder durch die eben genannten, besonderen Abmessungsverhältnisse oder alternativ durch eine Laufzone verhindert.

Ein weiterer Vorteil der erfindungsgemäßen Montageanordnung gegenüber der bekannten Montageanordnung besteht in ihrer vereinfachten Fertigung. Da sich der Ring während des gesamten Montageprozesses innerhalb der Ringnut befindet, sind keine besonderen konischen Abschnitte oder Durchmesseraufweitungen der Schraube erforderlich. Dies vereinfacht ihre Fertigung und ihre mechanische Stabilität, da Querschnittsänderungen bei Schrauben grundsätzlich mit einer mechanischen Schwächung einhergehen.

Die Hülse kann entweder so gestaltet werden, dass die Ringzonen als Einstich in der Innenwand der Hülse ausgeführt werden, oder dass sie in Axialrichtung beidseitig von Vorsprüngen an der Innenwand der Hülse begrenzt sind. Die erste Gestaltvariante mit einem die Ringzonen bildenden Einstich bietet sich insbesondere bei spanender Fertigung der Hülse an. Letztere besteht dann lediglich aus einem zylindrischen Rohrabschnitt, in den die Ringzonen eingestochen werden. Soll die Hülse umformend gefertigt werden, bietet sich die Gestaltvariante mit dem Vorsprüngen an der Innenwand der Hülse an. Damit ist es möglich, die Hülse aus einem Blechabschnitt zu formen, in den vorher die Vorsprünge eingeprägt wurden. Bei dieser Ausführung bilden die Vorsprünge dann einen integralen Bestandteil der Hülse, was deren Stabilität steigert.

Eine besonders bevorzugte Weiterbildung der zweiten Gestaltvariante mit den beidseitig durch Vorsprünge begrenzten Ringzonen besteht darin, innerhalb der Hülse eine Laufzone vorzusehen, die sich mit Ausnahme der Erstreckungsbereiche der Ringzonen und der Vorsprünge über die gesamte axiale Länge der Hülse erstreckt, wobei der Laufzonendurchmesser den Außendurchmesser des in die Ringnut eingesetzten Rings überschreitet. Bei dieser Weiterbildung wird die Innenwandung der Hülse durch eine Aneinaderreihung zweier oder mehrerer Ringzonen und der Laufzone gebildet, wobei die Zonen durch die Vorsprünge voneinander abgegrenzt sind. Die Laufzone muss nicht zwingend zusammenhängen, sie kann auch von einer oder mehreren Binnen-Ringzonen unterbrochen sein. Der Laufzonendurchmesser muss auch nicht über die gesamte Länge der Laufzone konstant sein. Wichtig ist nur, dass der Durchmesser der Laufzone den Außendurchmesser des in die Ringnut eingesetzten Rings stets überschreitet, damit die Schraube innerhalb der Laufzone frei beweglich ist. Der Ring ist hier nicht mit der Hülse verspannt, sodass er beim Anziehen der Schraube nicht beschädigt wird, und deshalb seine Funktion auch nach Demontage der Montageeinheit nicht verliert. So ist es möglich, die Schraube im vormontierten Zustand zunächst in der Ringzone unverlierbar "anzuknöpfen". Bei der Endmontage wird die Schraube angezogen, sodass der Ring die Ringzone verlässt und in die Laufzone gerät. Darin verbleibt er über den gesamten Anziehvorgang unbeschadet. Die Demontage der Anordnung wird der Ring ebenfalls schadlos überstehen, da er nur zweimal einen Vorsprung überwinden muss. Im Rahmen einer späteren Remontage kann die Anordnung in derselben Weise vormontiert werden, wie bei der Erstmontage. Da der Laufzonendurchmesser den Außendurchmesser des in die Ringnut eingesetzten Rings überschreitet, ist er mindestens genauso groß wie der Durchmesser der Ringzonen. Ringzonendurchmesser und Laufzonendurchmesser können demnach identisch sein; müssen es aber nicht.

Vorzugsweise wird der Kopfdurchmesser der Schraube - gemessen an seiner Auflagefläche - so dimensioniert, dass er den Außendurchmesser der Hülse übersteigt. So wird sichergestellt, dass die Hülse in dem Montageteil durch den Schraubenkopf formschlüssig gehalten wird. Dies ist insbesondere dann erforderlich, wenn die Verbindung zwischen Montageteil und Hülse lediglich über ein Presssitz realisiert wird, dessen Belastbarkeit deutlich unter dem der Schraubverbindung liegt. Würde der Schraubkopf nur an der Hülse anliegen, wäre die Haltekraft der Verbindung sonst durch die Festigkeit des Presssitzes begrenzt.

Alternativ könnte eine entsprechende Durchmesseraufweitung an der Hülse vorgesehen werden, die einen Formschluss in Axialrichtung zwischen Hülse und Montageteil bewirkt. Dies würde allerdings die Fertigung der Hülse erschweren. Auch ist es denkbar, die Hülse mit einem selbstschneidenden oder selbstfurchenden Außengewinde zu versehen und die Hülse damit in das Montageteil einzuschrauben.

Einen zusätzlichen Vorteil kann die Hülse der Montageanordnung bei Einsatz in einem Montageteil aus einem weichen Werkstoff wie Kunststoff erzielen, wenn die die Länge der Hülse der Stärke des Montageteil zwischen Auflagefläche und Fügeteil entspricht. In diesem Fall erstreckt sich die Hülse von der Kopfauflagefläche bis zur Trennfuge zwischen Montageteil und Fügeteil. Dies verhindert eine übermäßige Spannkrafteinleitung in das weiche Montageteil: Die Hülse nimmt die Kräfte auf und leitet sie direkt in das Fügeteil ein; eine Überlastung des Montageteils bei fehlerhaftem Anzug der Schraube wird dadurch ausgeschlossen.

Wie bereits erwähnt, erreicht die Erfindung den parallelen Toleranzausgleich durch Vermeidung einer radialen Verpressung von Schraube und Hülse über den elastischen Ring. Gleichwohl kann es in einigen Montagesituationen angezeigt sein, eine radiale Verpressung zwar weiterhin auszuschließen, eine behutsame axiale Verpressung des Rings mit der Hülse aber zuzulassen. Dies wird konstruktiv dadurch erreicht, dass die axiale Länge der Ringzonen so bemessen wird, dass sie die axiale Länge des Rings unterschreitet. Die kürzere axiale Länge der Ringzonen gegenüber der axialen Länge des Rings führt dazu, dass die Schraube sehr genau axial positioniert gehalten wird. Die axial wirkenden elastischen Kräfte zwängen die Schraube steht ins Zentrum der Ringzone. Trotzdem bleibt der parallele Versatz der Schraube unter Überwindung der elastischen Kräfte möglich, so dass die Schraube auch radial zentriert wird. Insgesamt ist also die axial verkürzte Ringzone immer dann empfehlenswert, wenn es auf eine sehr genaue Positionierung der Schraube innerhalb der Hülse ankommt.

Wenn es in der Montagesituation jedoch mehr auf den parallelen Versatz der Schraube ankommt, sollte die axiale Länge der Ringzone so gewählt werden, dass die axiale Länge des Rings überschreitet. Da eine gegenüber dem Ring verringerte Ringzone grundsätzlich eine axiale Beweglichkeit der Schraube zulässt, sollte die Ringzone nicht zu lang gewählt werden. In der Praxis hat sich ein Wert von vier Drittel der axialen Länge des Rings als angemessen erwiesen.

Die axial verlängerte Ringzone bewirkt, dass aus dem Ring keine elastischen Kräfte auf die Schraube einwirken. Dies schafft den wichtigen Vorteil, dass die Schraube innerhalb der Hülse um ihre Längsachse drehbar ist. Dieser Torsionswinkelausgleich ist beim Ansetzen des Schraubwerkzeugs an den Schraubenkopf vorteilhaft, da sich die Schraube sofort hinsichtlich der Kraftangriffspunkte des Schraubwerkzeugs ausrichten kann. Hierdurch kann der Einschraubvorgang beschleunigt werden. Außerdem wird sicher gestellt, dass das Werkzeug den Kopf korrekt im Werkzeugansatz greift.

Der Durchmesser der Ringzonen sollte vorzugsweise elf Zehntel des Außendurchmessers des in die Ringnut eingesetzten Rings entsprechen. Damit ist ein guter Kompromiss zwischen Beweglichkeit im Rahmen des Toleranzausgleichs und Positioniergenauigkeit gefunden.

Wenn man nun die Ringzone geringfügig breiter wählt als den Ring (Kombination der Ansprüche 2 und 10), ist der Ring beim Festziehen der Schraube vollkommen unbelastet, so dass er aller Wahrscheinlichkeit nach unversehrt bleibt. Damit wird die Verschraubung zu einem späteren Zeitpunkt auch problemlos wieder zu lösen sein. Ein zerstörter Ring würde dies erschweren.

Bei der erfindungsgemäßen Montageanordnung befindet sich der Ring stets innerhalb der Ringnut. Um die Positioniergenauigkeit der Schraube zu gewährleisten ist es erforderlich, dass der Ring während des gesamten Montageprozesses in der Ringnut verbleibt und nicht durch Abrollen an der Hülse die Ringnut verlässt. Es kann dadurch erreicht werden, dass der Nutgrunddurchmesser der Ringnut so gewählt wird, dass sie den Innendurchmesser des unmontierten, spannungsfreien Rings überschreitet. Dadurch wird der in die Ringnut eingesetzte Ring unter Spannung stehend elastisch aufgeweitet und sitzt stramm an der vorgesehenen Stelle. Um den Ring beim Montageprozess nicht zu überlasten, empfiehlt es sich den Nutgrunddurchmesser zu neun Achtel des unmontierten, spannungsfreien Rings zu wählen.

Bei dem Ring handelt es sich vorzugsweise um einen Runddichtring (O-Ring) aus einem elastomeren Werkstoff. Runddichtringe sind kostengünstige und hochverfügbare Norm-Bauteile, welche - im Rahmen der Erfindung zweckentfremdet - die Funktion des Rings vorzüglich übernehmen.

Die erfindungsgemäße Montageanordnung stellt nur geringe Anforderungen an die Gestalt der Schraube. Dies hat zur Folge, dass die Schraube besonders rationell gefertigt werden kann. Ein geeignetes Verfahren zur Herstellung einer Schraube für die vorliegende Montageanordnung besteht darin, dass zunächst ein Schraubrohling mit gewindefreiem Schaft und Kopf hergestellt wird, dass dann zwei Ringnuten in den zylindrischen Rohling eingewalzt werden, so dass zwischen den Ringnuten ein Ringwulst herausgedrückt wird, und dass schließlich zumindest an der dem Schraubenkopf abgewandten Seite des Ringnutwulstes ein Gewinde in den zylindrischen Schaft eingewalzt wird. Zum Einwalzen des Gewindes verwendet man Gewindewalzbacken, die im Bereich des Ringwulstes eine entsprechende Ausnehmung aufweisen, um den Ringwulst um nicht durch das Gewindewalzen zu beschädigen.

Die vorliegende Erfindung soll nun anhand von Ausführungsbeispielen näher erläutert werden. Hierfür zeigen:
- Fig. 1:: Erste Ausführungsbeispiele von Hülse, Ring und Schraube in Explosionsdarstellung;
- Fig.2:: Bauteile aus Figur 1, Einsetzen der beringten Schraube in die eingeschlagene Hülse;
- Fig. 3:: Zweites Ausführungsbeispiel von beringter Schraube und Hülse;
- Fig. 4a, b, c:: Montageprozess der Bauteile aus Fig. 3.

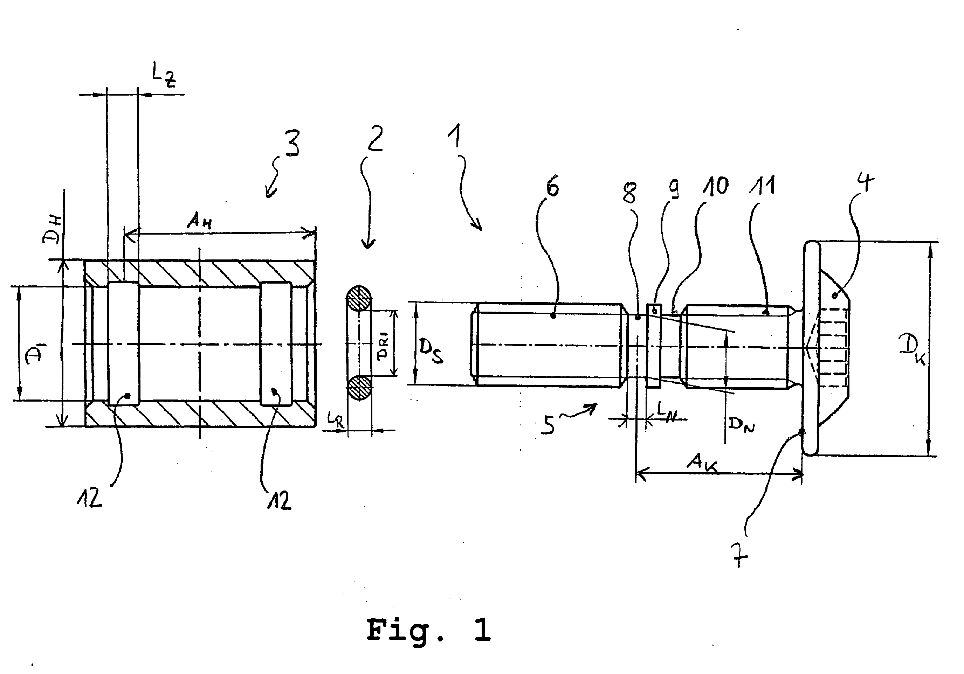

Figur 1 zeigt ein erstes Ausführungsbeispiel der erfindungsgemäßen Montageanordnung in Explosionsdarstellung. Die Montageanordnung umfasst mindestens drei Teile, nämlich eine Schraube 1, einen Ring 2 und eine Hülse 3. Der vorgesehene Einsatzzweck kann auch Accessoires wie Unterlegscheiben erfordern.

Die Schraube 1 umfasst wie jede Schraube einen Kopf 4 und einen Schaft 5, wobei der Schaft 5 endseitig mit einem Gewinde 6 versehen ist. Der Durchmesser des Gewindes 6 entspricht im gezeigten Ausführungsbeispiel dem Schaftdurchmesser D_{S} der Schraube. Der Schaftdurchmesser D_{S} ist deutlich kleiner als der Kopfdurchmesser D_{K} gemessen an der Auflagefläche 7 des Kopfes. Zwischen Gewinde 6 und Kopf 4 befindet sich eine Ringnut 8 im Schaft der Schraube, deren Nutgrunddurchmesser D_{N} noch einmal kleiner ist als der Schaftdurchmesser. Der Abstand des Zentrums der Ringnut 8 zur Auflagefläche 7 des Kopfes 4 wird im folgenden mit A_{K} bezeichnet.

In Richtung des Kopfes 4 ist die Ringnut 8 von einem Ringwulst 9 begrenzt. Der Durchmesser des Ringwulstes 9 entspricht in etwa dem Schaftdurchmesser D_{S}. An den Ringwulst 9 schließt sich eine weitere Ringnut 10 und ein weiteres Gewinde 11 an. Ringnut 10 und Gewinde 11 haben jedoch für die Funktionsweise der Montageanordnung keine Funktion und sind vielmehr durch die Produktion bedingt. Die in Figur 1 dargestellte Schraube 1 wird nämlich so hergestellt wie oben beschrieben, also erst Walzen der beiden Ringnuten 8, 10 unter Bildung des Ringwulstes 9 und anschließend Walzen des Gewindes 6, welches an der dem Kopf 4 abgewandten Seite des Ringwulstes 9 liegt. Das unnütze Gewinde 11 kann aus produktionstechnischen Gründen gleichzeitig mit dem Nutzgewinde 6 entstehen.

Bei dem Ring 2 handelt es sich um einen normgemäßen Runddichtring (so genannter "O-Ring") aus einem elastomeren Werkstoff. Der Innendurchmesser D_{RI} des spannungsfreien, unmontierten Rings 2 ist kleiner als der Nutgrunddurchmesser D_{N} der Ringnut 8. Bei dem bezeichneten Ausführungsbeispiel gilt D_{N} = ⁹/₈ D_{RI}. Die axiale Länge L_{R} des Rings entspricht der axialen Länge L_{N} der Ringnut 8, also dem axialen Maß zwischen kopfseitigen Gewindeauslauf des Gewindes 6 und dem Ringwulst 9. Da es sich bei dem Ring 2 um einen torusförmigen Runddichtring handelt, entspricht das Maß L_{R} dem Querschnittsdurchmesser des O-Rings. Aufgrund der gewählten Maße des Rings 2 kann dieser unter Aufweitung über das Gewinde 6 geschoben und in die Ringnut 8 eingesetzt werden. Da der Nutgrunddurchmesser D_{N} den Innendurchmesser D_{RI} des unmontierten Rings 2 übersteigt, setzt der Ring 2 unter Spannung stehend elastisch aufgeweitet in der Ringnut 8. Gewinde 6 und Ringwulst 9 flankieren ihn beidseitig, so dass er fest in dieser Position bleibt.

Bei dem in Figur 1 dargestellten Ausführungsbeispiel der Hülse 3 handelt es sich um ein Drehteil. Die Außenseite ist rein zylindrisch und hält den Außendurchmesser D_{H} ein. Der Außendurchmesser D_{H} der Hülse 3 ist kleiner als der Kopfdurchmesser D_{K} des Kopfes 4. Auch die Innenwandung der Hülse ist abgesehen von stirnseitigen Einsenkungen zylindrisch mit einem Hülseninnendurchmesser D_{I}. Die Hülse 3 weist an ihrer Innenwand zwei Einstiche 12 auf, die jeweils eine Ringzone bilden. Die axiale Länge L_{Z} ist bei diesem Ausführungsbeispiel geringfügig größer als die axiale Länge L_{R}. Es gilt L_{Z} = ⁴/₃ L_{R}. Der Abstand A_{H} vom Zentrum des einen jeden Einstichs 12 zum entfernten, stirnseitigen Ende der Hülse 3, entspricht dem Abstand A_{K} von der Ringnut 8 zum Kopf 4 der Schraube 1. Da die Hülse 3 vollkommen symmetrisch aufgebaut ist, gilt dies für beide Einstiche 12 gleichermaßen.

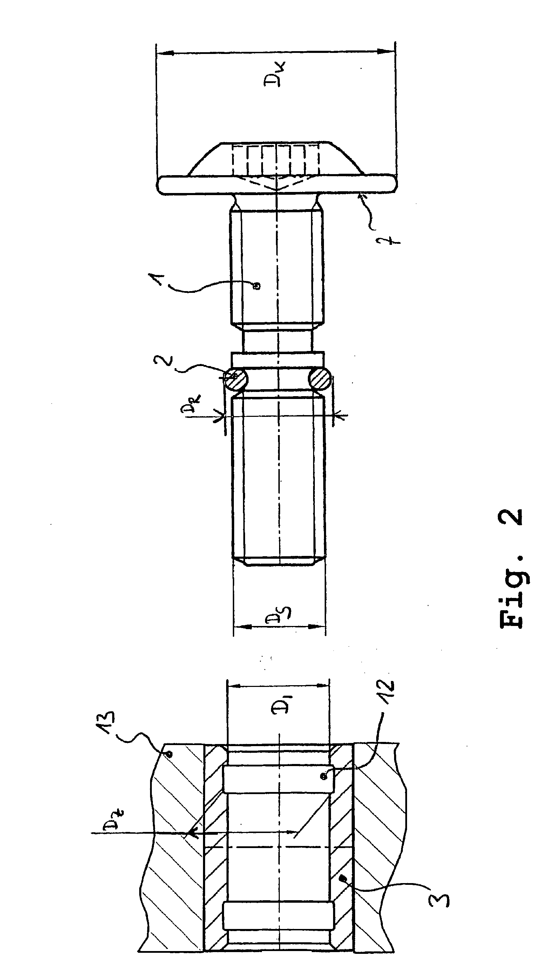

Figur 2 zeigt das in Figur 1 dargestellte Ausführungsbeispiel der Montageanordnung unmittelbar vor Erreichen des vormontierten Zustandes. Die Hülse 3 wurde in ein Montageteil 13 eingesetzt und hält darin mit einem Presssitz. Die Bohrung in dem Montageteil 13 ist somit entsprechend auf den Außendurchmesser D_{H} der Hülse anzupassen. Der Ring 2 wurde in die Ringnut 8 der Schraube 1 eingesetzt. Der Ring 2 ist dort radial elastisch aufgeweitet, sein Außendurchmesser in diesem Zustand wird im folgenden mit D_{R} bezeichnet. Der Durchmesser D_{Z} der durch den Einstich 12 gebildeten Ringzone ist größer als der Außendurchmesser D_{R} des in die Ringnut 8 eingesetzten Rings 2. Es gilt D_{Z} = ¹¹/₁₀ D_{R}. Der Hülseninnendurchmesser D_{I} unmittelbar an der Grenze zum Einstich 12 ist kleiner als der Außendurchmesser D_{R} des Rings 2, jedoch größer als der Schaftdurchmesser D_{S}.

Aufgrund dieser Durchmesserkonstellation ist es möglich, die Schraube 1 mit ihren Schaft in die Hülse 3 einzuführen und zwar unter entsprechender Kraftaufwendung so weit, bis die Auflagefläche 7 auf Hülse 3 und Montageteil 13 zur Auflage kommt. Bei einem Einführen der Schraube 1 wird der Ring 2 in den Bereichen, wo der Hülseninnendurchmesser D_{I} beträgt, radial von der Innenwandung der Hülse 3 komprimiert, so dass auf diesen Abschnitten eine gewisse Reibungskraft zu überwinden ist. Diese wird jedoch von dem Vorschub eines Montagewerkzeugs ohne Probleme gemeistert. Da der Ring 2 stramm in der Ringnut 8 sitzt und von dem Ringwulst 9 gestützt wird, verharrt er in seiner Position und wird nicht beim Einführen der Schraube 1 aus seiner Position gewalkt. Wenn die Schraube 1 so weit in die Hülse 3 eingeführt ist, dass sich der Ring 2 in der ihm zu erst begegnenden Ringzone befindet - in Figur 2 der rechte Einstich - ist der Ring 2 aufgrund des größeren Durchmesser D_{Z} von außen nicht belastet. In dieser vormontierten Position eingeknöpft wird das Montageteil 13 zur Fügestelle gefördert. Die Schraube 1 ist dann unverlierbar in der Hülse 3 gehalten, da die Gewichtskraft der Schraube nicht ausreicht, den Ring 2 aus der Ringzone 12 zu befreien. Da die Ränder der Ringzone L_{Z} nur geringfügig größer ist als die Axiallänge des Rings 2, ist die Schraube 1 nur minimal axial in der Hülse beweglich. Vielmehr ist die Schraube 1 im vormontierten Zustand radial beweglich, da die Ringzone dem Ring entsprechend Platz lässt. Die Längsachsen von Hülse 3 und Schraube 1 können sich im vormontierten Zustand, wenn sich Ring 2, Ringnut 8 und Einstich 12 auf einer Höhe befinden, parallel zueinander versetzen. Selbstverständlich ist auch ein Winkelversatz im gewissen Maße zulässig.

Eine Besonderheit der in Figur 2 dargestellten Konstellation besteht auch darin, dass die Schraube sich in Montageposition frei drehen lässt, da der Ring 2 nicht an der Wandung des Einstichs 12 reibt. Durch diesen Torsionstoleranzausgleich kann das Schrauberwerkzeug besser im Kopf 4 positioniert werden. Wenn dies erfolgt ist, wird die Schraube angezogen, so dass die Ringnut 8 sich auf Höhe des linken Einstichs 12 befindet, sobald die Auflagefläche 7 auf Hülse 3 und Montageteil 13 anliegt. In diesem Augenblick kann sich die Schraube wieder drehen, ohne dass der Ring 2 in der Hülse 3 schleift. Bei Beginn des Verspannungszustandes wird der Ring somit nicht verformt oder zerquetscht, so dass er unversehrt bleibt.

Deswegen kann die Schraube zu einem späteren Zeitpunkt auch wieder problemlos gelöst und aus der Hülse herausgezogen werden. Im Rahmen von Wartungsarbeiten kann die mit der Montageanordnung gebildete Verschraubung folglich problemlos demontiert werden. Ein besonderer Vorteil besteht dann darin, dass der Monteur nach Lösen der Schraube 1 dieser wieder in dem rechten Einstich positionieren kann, so dass die Schraube nicht in der Werkstatt verloren geht.

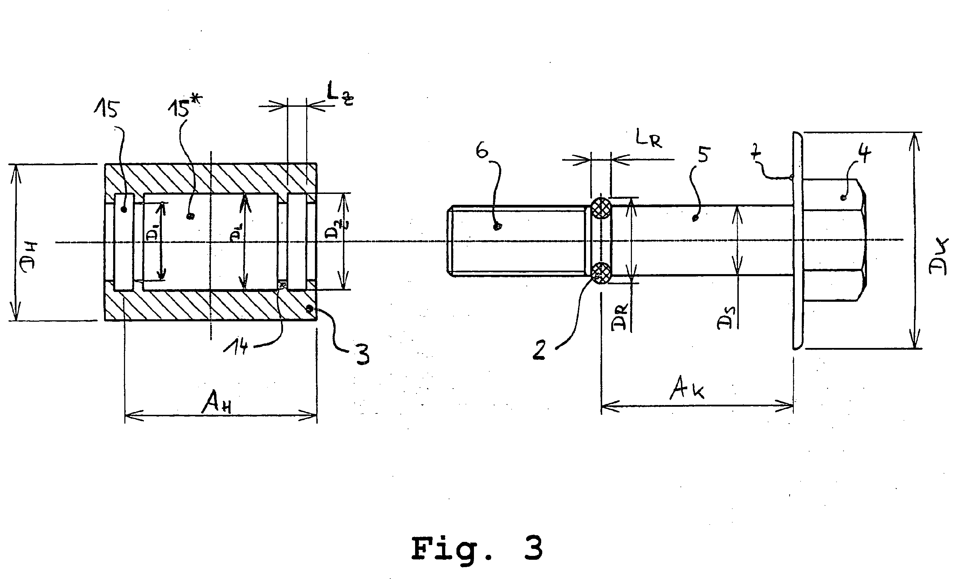

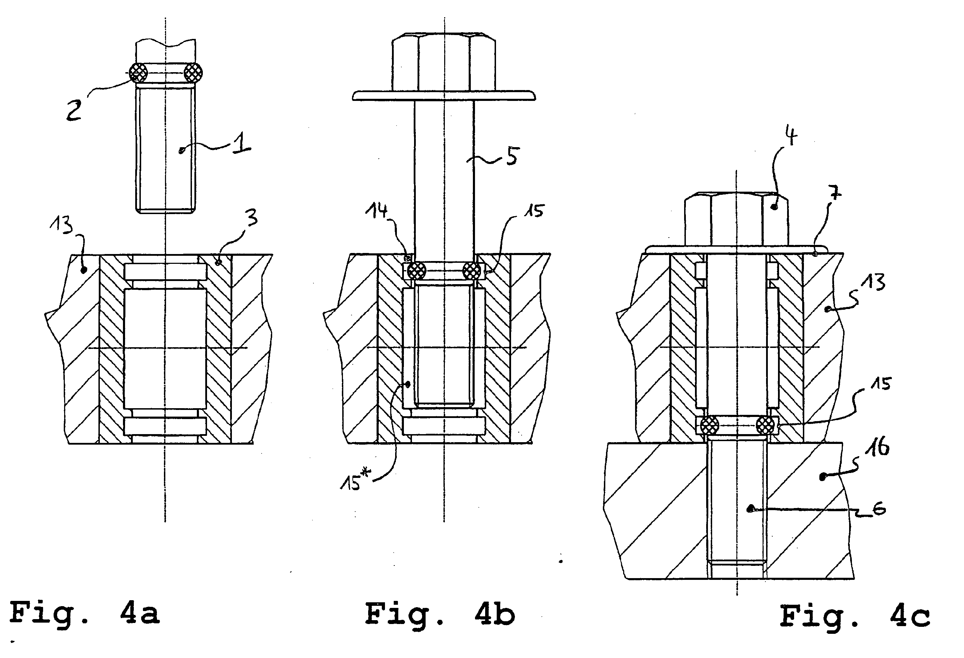

Die Figur 3 zeigt ein weiteres Ausführungsbeispiel der erfindungsgemäßen Montageanordnung. So wie das andere Ausführungsbeispiel auch umfasst diese Schraube 1 einen Kopf 4 mit einer hervorstehenden Auflagefläche 7, deren Durchmesser D_{K} beträgt. Der Schaft 5 ist mit einem Gewinde 6 versehen, an welches sich eine Ringnut 8 anschließt. In die Ringnut ist ein elastischer Ring 2 eingelegt. Der Ring 2 sitzt radial aufgeweitet in der Ringnut 8, sein Außendurchmesser D_{R} übersteigt den Schaftdurchmesser D_{S} der Schraube. Anders als bei der in den Figuren 1 und 2 dargestellten Hülse wurde die in Figur 3 und 4 dargestellte Hülse 3 durch ein Umformverfahren hergestellt. Hierzu wurden zunächst in ein rechteckiges Blech vier Vorsprünge 14 eingeprägt, anschließend wurde das Blech rund geformt, so dass es eine zylindrische Hülse 3 bildet.

Die Vorsprünge 14 an der Innenseite der Hülse umgrenzen jeweils eine Ringzone 15 mit einem Innendurchmesser D_{Z} wobei gilt D_{Z} > D_{R}. Die Vorsprünge 14 reduzieren den Hülseninnendurchmesser D_{I} an den Grenzen der Ringzone 15, es gilt D_{S} < D_{I} < D_{R}. Die axiale Länge L_{Z} der von den Vorsprüngen 14 begrenzten Ringzone 15 ist bei diesem Ausführungsbeispiel jedoch kleiner als die axiale Länge L_{R} des Rings 2. Zwischen den beiden Ringzonen 15 erstreckt sich an der Innenwandung der Hülse 3 eine Laufzone 15*. Der hier konstante Laufzonendurchmesser D_{L} entspricht dem Innendurchmesser D_{Z} der Ringzonen 15. Dies ist ein Sonderfall, D_{L} kann auch ungleich D_{Z} sein, solange gilt D_{L} > D_{R}. Der Laufzonendurchmesser D_{L} muss auch nicht über die gesamte Länge der Laufzone konstant sein. Innerhalb der Laufzone 15* ist der Ring 2 unbelastet, sodass die Schraube 1 frei in der Hülse 3 läuft und der Ring 2 unbeschädigt bleibt.

Der Außendurchmesser D_{H} der Hülse 3 ist wiederum kleiner als der Kopfdurchmesser D_{K}. Der Abstand A_{H} vom Zentrum der Ringzone 15 zum gegenüberliegenden Ende der Hülse entspricht wiederum dem mittleren Abstand A_{K} der Ringnut 8 zur Auflagefläche 7 des Kopfes 4.

Die Figuren 4a bis 4c zeigen Schritte der Montage des in Figur 3 gezeigten Ausführungsbeispiels. Zunächst wird die Hülse 3 in ein entsprechendes Durchgangsloch eines Montageteils 13 eingesetzt. Der Außendurchmesser D_{H} der Hülse 3 und der Durchmesser der Aufnahmebohrung in Montageteil 13 sind so aufeinander abgestimmt, dass die Hülse 3 mit einem Presssitz im Montageteils 13 hält. Die axiale Länge der Hülse 3 entspricht der Plattenstärke des Montageteils 13. Damit wird eine Überlastung des Montageteils 13 bei zu stark angezogener Schraube 4 verhindert. Als nächsten Schritt wird die Schraube 1 in die Hülse eingeführt, so dass der Ring 2 in der oberen Ringzone 15 aufgenommen wird; vgl. Figur 4b. In dieser Position hat die Montageanordnung ihren vormontierten Zustand erreicht.

Ein wichtiger funktionaler Unterschied zwischen der in den Figuren 3 und 4 dargestellten Montageanordnung gegenüber dem Ausführungsbeispiel der Figuren 1 und 2 besteht darin, dass die axiale Länge der Ringzone 15 kürzer ist als die axiale Länge L_{R} des Rings. Dies bewirkt, dass der Ring 2 im vormontierten Zustand axial von den Vorsprüngen 14 behutsam gepresst wird. In der Figur 4b ist zu erkennen, dass die Länge der Ringzone nur geringfügig kleiner ist als die Länge des Rings, so dass Vorsprünge 14 lediglich eine Linienberührung mit dem Ring eingehen. Es handelt es sich um zwei kreisförmige Berührungslinien, die jeweils an der zum Ring gewandten Kante der Vorsprünge 14 verlaufen. Der Ring wird dadurch kaum verformt.

Gleichwohl bewirkt die Linienberührung eine sehr maßhaltige Positionierung der Schraube relativ zur Hülse im vormontierten Zustand. Ihre axiale Beweglichkeit ist annähernd Null, minimale axiale Auslenkungen gehen mit einer elastischen Verformung des Rings einher, so dass dieser die Schraube elastisch in der Ringzone zentriert. Auch eine Winkelauslenkung der Schraube gegenüber der Hülse ist nur gegen elastische Vorspannkraft des Rings möglich, so dass hier ebenfalls eine Zentrierungswirkung auftritt, welche die Schraube koaxial zur Hülse hält. Ein radialer Versatz der Hülse ist ebenfalls bis zum Anschlag des Schaftes 5 an den Vorsprüngen 14 möglich, hier allerdings auch nur gegen Federwirkung des Rings. Insgesamt erreicht diese Ausführungsform mit der verkürzten Ringzone eine sehr maßhaltige Aufrichtung der Schraube in der Hülse und einen Toleranzausgleich nur gegen elastische Kraft des Rings. Keinen Toleranzausgleich erlaubt dieses Ausführungsbeispiel hinsichtlich einer Drehung der Schraube in der Hülse, hier wirken die Reibungskräfte an der Linienberührung der Vorsprünge 14 entgegen.

Die in Figur 4b gezeigte Montaganordnung in vormontierter Stellung wird alsdann zwecks Endmontage zur Fügestelle am Fügeteil 16 gefördert. Auf dem Weg dorthin ist die Schraube lediglich ihren eigenen Gewichtskräften ausgesetzt, so dass die behutsame elastische Verspannung des Rings die Schraube in der Figur 4b gezeigten Position hält. Wenn das Montageteil 13 gegenüber dem Fügeteil 16 unter Ausnutzung des Toleranzausgleichs ausgerichtet ist, ergreift ein nicht dargestellter Schrauber den Kopf 4 der Schraube und schraubt sie mit ihrem Gewinde 6 in das Montageteil 13 ein. Beim Einschrauben wandert die Schraube 4 axial rasch tiefer in die Hülse 3 hinein. Dabei besteht die Gefahr, dass der in der Ringnut 8 sitzende Ring 2 an der Innenwandung der Hülse 3 walkt und zerrieben wird. Um dies zu verhindern, ist zwischen den inneren Vorsprüngen 14 eine Laufzone 15* vorgesehen, also ein Abschnitt der Hülse, deren Innendurchmesser D_{L} stets größer ist als der Außendurchmesser D_{R} des in der Ringnut 8 sitzenden Rings. Der Ring 2 findet somit auf seinem Weg durch die Laufzone 15* genügend Platz und walkt nicht an Innenwand der Hülse. Beschädigungen des Rings 2 sind deswegen auszuschließen.

Wenn die Auflagefläche 7 des Kopfes 4 auf Hülse 3 und Montageteil 13 zu liegen kommt, befindet sich der Ring 2 in der unteren Ringzone 15. Das Verlassen der oberen Ringzone 15 über die Vorsprünge 14 und das Eindringen in die untere Ringzone 15 geht mit elastischer Verformung des Rings 2 einher, die von dem Vorschub des Schraubwerkzeuges problemlos überwunden wird.

In der in Figur 4c dargestellten Position beginnt dann der Verspannungsvorgang, bei dem das Montageteil 13 mit dem Fügeteil 16 über die Schraube 4 verspannt wird. Der Ring 2 verbleibt während dieses Verspannungsvorgangs in der Ringnut 15 und läuft dort grundsätzlich Gefahr, an seinen Kontaktlinien von den Vorsprüngen 14 zerrieben werden, während die Schraube 4 festgezogen wird. Falls der Ring aufreißt, kann er nicht mehr wiederverwertet werden. Sofern ein späteres Lösen der Schraube 1 eingeplant ist, empfiehlt es sich, die axiale Länge der unteren Ringzone 15 größer zu wählen als die axiale Länge des Rings 2. Damit würde der Ring 2 während des Anzugsvorgangs frei in der vergrößerten Ringzone 15 drehen und gewiss erhalten bleiben. Der intakte Ring könnte beim späteren Lösen der Verschraubung auch wieder genutzt werden, um die Schraube in der oberen Ringzone im demontierten Zustand anzuknöpfen. Zwei unterschiedlich lang gewählte Ringzonen - die eine länger, die andere kürzer als der Ring - können insoweit vorteilhaft sein. Nachteil dieser Variante ist freilich eine besondere Positionierbedürftigkeit der Hülse 3 gegenüber dem Montageteil 13, da eine Hülse mit zwei unterschiedlich langen Ringzonen verkehrt herum eingebaut werden kann. Alternativ zu der zweiten, dem Fügeteil 16 zugewandten Ringzone kann die Laufzone 15* verlängert werden, sodass sie sich von dem an die obere Ringnut 15 grenzenden, inneren Vorsprung 14 bis zum fügeteilseitigen Ende der Hülse 3 erstreckt.

## Patentansprüche

1. Montageanordnung, umfassend eine in ein Montageteil (13) einsetzbare Hülse (3), einen elastischen Ring (2) und eine einen Kopf (4) und einen Schaft (5) aufweisende Schraube (1), welche mit ihrem Schaft (5) bis zum Aufliegen der Auflagefläche (7) des Kopfes (4) in die Hülse (3) einführbar ist, wobei der Schaft (5) der Schraube (1) mit mindestens einem Gewinde (6) und mit mindestens einer Ringnut (8) versehen ist, in welche der Ring (2) einsetzbar ist, und wobei der Außendurchmesser (D_{R}) des in die Ringnut (8) eingesetzten Rings (2) sowohl den Schaftdurchmesser (D_{S}) der Schraube (1) überschreitet, als auch den Kopfdurchmesser (D_{K}) der Schraube (1) unterschreitet, wobei die Hülse (3) eine Ringzone (12,15) aufweist, deren Hülseninnendurchmesser (D**_{I}**) an der Grenze zur Ringzone (12, 15) sowohl den Außendurchmesser (D**_{R}**) des in die Ringnut (8) eingesetzten Rings (2) unterschreitet, als auch den Schaftdurchmesser (D**_{S}**) überschreitet **dadurch gekennzeichnet, dass** innerhalb der Hülse (3) mindestens **zwei**, in Axialrichtung beidseitig begrenzte Ringzonen (12, 15) symmetrisch vorgesehen **sind**, deren Durchmesser (D_{Z}) den Außendurchmesser (D_{R}) des in die Ringnut (8) eingesetzten Rings (2) überschreitet.

2. Montageanordnung nach Anspruch 1, **dadurch gekennzeichnet, dass** der axiale Abstand (A_{H}) des Zentrums einer jenen Ringzone (12, 15) zum entfernten Ende der Hülse (3) dem axialen Abstand (A_{K}) des Zentrums der Ringnut (8) zur Auflagefläche (7) des Kopfes (4) entspricht.

3. Montageanordnung nach Anspruch 1 und 2, **dadurch gekennzeichnet, dass** die Ringzonen als Einstich (12) in die Innenwand der Hülse (3) ausgeführt sind.

4. Montageanordnung nach Anspruch 1 und 2, **dadurch gekennzeichnet, dass** die Ringzonen (15) in Axialrichtung beidseitig von Vorsprüngen (14) an der Innenwand der Hülse (3) begrenzt sind.

5. Montageanordnung nach Anspruch 4, **dadurch gekennzeichnet, dass** die Vorsprünge (14) integraler Bestandteil der Hülse (3) sind.

6. Montageanordnung nach Anspruch 4 oder 5, **dadurch gekennzeichnet, dass** innerhalb der Hülse (3) eine Laufzone (15*) vorgesehen ist, die sich mit Ausnahme der Erstreckungsbereiche der Ringzonen (15) und der Vorsprünge (14) über die gesamte axiale Länge der Hülse (3) erstreckt, wobei der Laufzonendurchmesser (D_{L}) den Außendurchmesser (D_{R}) des in die Ringnut (8) eingesetzten Rings (2) überschreitet.

7. Montageanordnung nach einem der Ansprüche 1 bis 6, **dadurch gekennzeichnet, dass** der Kopfdurchmesser (D_{K}) der Schraube (1) den Außendurchmesser (D_{H}) der Hülse überschreitet.

8. Montageanordnung nach einem der Ansprüche 1 bis 7, **dadurch**
**gekennzeichnet, dass** bei deren Einsatz im Montageteil die axiale Länge der Hülse (3) der Stärke des Montageteils (13) zwischen Auflagefläche (7) und dem der Montageanordnung zugeordneten Fügeteil (16) entspricht.

9. Montageanordnung nach einem der Ansprüche 1 bis 8, **dadurch gekennzeichnet, dass** die axiale Länge (L_{Z}) der Ringzonen (15) die axiale Länge (L_{R}) des Rings (2) unterschreitet.

10. Montageanordnung nach einem der Ansprüche 1 bis 8, **dadurch gekennzeichnet, dass** die axiale Länge (L_{Z}) der Ringzonen (12) die axiale Länge (L_{R}) des Rings (2) überschreitet.

11. Montageanordnung nach Anspruch 10, **dadurch gekennzeichnet, dass** die axiale Länge (L_{Z}) der Ringzonen (12) vier Drittel der axialen Länge (L_{R}) des Rings (2) entspricht.

12. Montageanordnung nach einem der Ansprüche 1 bis 11, **dadurch gekennzeichnet, dass** der Durchmesser (D_{Z}) der Ringzonen (12, 15) elf Zehntel des Außendurchmessers (D_{R}) des in die Ringnut (8) eingesetzten Rings (2) entspricht.

13. Montageanordnung nach einem der Ansprüche 1 bis 12, **dadurch gekennzeichnet, dass** der Nutgrunddurchmesser (D_{N}) der Ringnut (8) den Innendurchmesser (D_{RI}) des unmontierten, spannungsfreien Rings (2) überschreitet, sodass der in die Ringnut (8) eingesetzte Ring (2) unter Spannung stehend elastisch aufgeweitet ist.

14. Montageanordnung nach Anspruch 13, **dadurch gekennzeichnet, dass** der Nutgrunddurchmesser (D_{N}) der Ringnut (8) neun Achtel des Innendurchmessers (D_{RI}) des unmontierten, spannungsfreien Rings (2) entspricht.

15. Montageanordnung nach einem der Ansprüche 1 bis 14, **dadurch gekennzeichnet, dass** es sich bei dem Ring (2) um einen Runddichtring handelt.

## Claims

1. An assembly arrangement including a sleeve (3) which can be fitted into an assembly portion (13), an elastic ring (2) and a screw (1) which has a head (4) and a shank (5) and which can be introduced into the sleeve (3) with its shank (5) until contact occurs with the contact surface (7) of the head (4), wherein the shank (5) of the screw (1) is provided with at least one thread (6) and with at least one annular groove (8) into which the ring (2) can be fitted and wherein the outside diameter (D_{R}) of the ring (2) fitted into the annular groove (8) both exceeds the shank diameter (D_{S}) of the screw (1) and is also less than the head diameter (D_{K}) of the screw (1), wherein the sleeve (3) has an annular zone (12, 15) whose sleeve inside diameter (D₁) at the boundary to the annular zone (12, 15) is both less than the outside diameter (D_{R}) of the ring (2) fitted into the annular groove (8) and also exceeds the shank diameter (D_{S}), **characterised in that** within the sleeve (3) there are symmetrically provided at least two annular zones (12, 15) which are delimited at both sides in the axial direction and whose diameter (D_{S}) exceeds the outside diameter (D_{R}) of the ring (2) fitted into the annular groove (8).

2. An assembly arrangement according to claim 1 **characterised in that** the axial spacing (A_{H}) of the centre of one said annular zone (12, 15) relative to the remote end of the sleeve (3) corresponds to the axial spacing (A_{K}) of the centre of the annular groove (8) relative to the contact surface (7) of the head (4).

3. An assembly arrangement according to claim 1 or claim 2 **characterised in that** the annular zones are in the form of a recess (12) in the inside wall of the sleeve (3).

4. An assembly arrangement according to claim 1 or claim 2 **characterised in that** the annular zones (15) are delimited at both sides inn the axial direction by projections (14) at the inside wall of the sleeve (3).

5. An assembly arrangement according to claim 4 **characterised in that** the projections (14) are an integral component part of the sleeve (3).

6. An assembly arrangement according to claim 4 or claim 5 **characterised in that** provided within the sleeve (3) is a running zone (15*) which with the exception of the regions in which the annular zones (15) and the projections (14) extend extends over the entire axial length of the sleeve (3), wherein the running zone diameter (D_{L}) exceeds the outside diameter (D_{R}) of the ring (2) fitted into the annular groove (8).

7. An assembly arrangement according to one of claim 1 to 6 **characterised in that** the head diameter (D_{K}) of the screw (1) exceeds the outside diameter (D_{H}) of the sleeve.

8. An assembly arrangement according to one of claims 1 to 7 **characterised in that** upon insertion thereof into the assembly portion the axial length of the sleeve (3) corresponds to the thickness of the assembly portion (13) between the contact surface (7) and the join portion (16) associated with the assembly arrangement.

9. An assembly arrangement according to one of claims 1 to 8 **characterised in that** the axial length (L_{Z}) of the annular zones (15) is less than the axial length (L_{R}) of the ring (2).

10. An assembly arrangement according to one of claims 1 to 8 **characterised in that** the axial length (L_{Z}) of the annular zones (12) exceeds the axial length (L_{R}) of the ring (2).

11. An assembly arrangement according to claim 10 **characterised in that** the axial length (L_{Z}) of the annular zones (12) corresponds to four thirds of the axial length (L_{R}) of the ring (2).

12. An assembly arrangement according to one of claims 1 to 11 **characterised in that** the diameter (D_{Z}) of the annular zones (12, 15) corresponds to eleven tenths of the outside diameter (D_{R}) of the ring (2) fitted into the annular groove (8).

13. An assembly arrangement according to one of claims 1 to 12 **characterised in that** the groove base diameter (D_{N}) of the annular groove (8) exceeds the inside diameter (D_{RI}) of the non-fitted stress-free ring (2) so that the ring (2) fitted into the annular groove (8) is elastically expanded under stress.

14. An assembly arrangement according to claim 13 **characterised in that** the groove base diameter (D_{N}) of the annular groove (8) corresponds to nine eighths of the inside diameter (D_{RI}) of the non-fitted stress-free ring (2).

15. An assembly arrangement according to one of claims 1 to 14 **characterised in that** the ring (2) is a round sealing ring.

## Revendications

1. Agencement de montage comprenant une douille (3) pouvant être insérée dans une partie de montage (13), une bague élastique (2) et une vis (1) présentant une tête (4) et une tige (5), qui peut être introduite avec sa tige (5) jusqu'à ce que la surface d'appui (7) de la tête (4) repose dans la douille (3), étant entendu que la tige (5) de la vis (1) est munie d'au moins un filetage (6) et d'au moins une rainure annulaire (8) dans laquelle la bague (2) peut être insérée, et étant entendu que le diamètre extérieur (D_{R}) de la bague (2) insérée dans la rainure annulaire (8) est à la fois plus grand que le diamètre de la tige (D_{S}) de la vis (1) et plus petit que le diamètre de la tête (D_{K}) de la vis (1), étant entendu que la douille (3) présente une zone annulaire (12, 15) dont le diamètre intérieur de la douille (D_{I}) à la limite de la zone annulaire (12, 15) est à la fois plus petit que le diamètre extérieur (D_{R}) de la bague (2) insérée dans la rainure annulaire (8) et plus grand que le diamètre de la tige (D_{S}), **caractérisé en ce qu'**il est prévu à l'intérieur de la douille (3) au moins deux zones annulaires (12, 15) délimitées des deux côtés dans la direction axiale, en position symétrique, dont le diamètre (D_{Z}) est plus grand que le diamètre extérieur (D_{R}) de la bague (2) insérée dans la rainure annulaire (8).

2. Agencement de montage selon la revendication 1, **caractérisé en ce que** la distance axiale (A_{H}) du centre d'une zone annulaire respective (12, 15) par rapport à l'extrémité distante de la douille (3) correspond à la distance axiale (A_{K}) du centre de la rainure annulaire (8) par rapport à la surface d'appui (7) de la tête (4).

3. Agencement de montage selon la revendication 1 et 2, **caractérisé en ce que** les zones annulaires sont réalisées comme collet (12) dans la paroi intérieure de la douille (3).

4. Agencement de montage selon la revendication 1 et 2, **caractérisé en ce que** les zones annulaires (15) sont délimitées des deux côtés, dans la direction axiale, par des saillies (14) sur la paroi intérieure de la douille (3).

5. Agencement de montage selon la revendication 4, **caractérisé en ce que** les saillies (14) font partie intégrante de la douille (3).

6. Agencement de montage selon la revendication 4 ou 5, **caractérisé en ce qu'**il est prévu à l'intérieur de la douille (3) une zone de course (15*), qui s'étend sur toute la longueur axiale de la douille (3) à l'exception des surfaces d'extension des zones annulaires (15) et des saillies (14), étant entendu que le diamètre de la zone de course (D_{L}) est plus grand que le diamètre extérieur (D_{R}) de la bague (2) insérée dans la rainure annulaire (8).

7. Agencement de montage selon l'une des revendications 1 à 6, **caractérisé en ce que** le diamètre de la tête (D_{K}) de la vis (1) est plus grand que le diamètre extérieur (D_{H}) de la douille.

8. Agencement de montage selon l'une des revendications 1 à 7, **caractérisé en ce que** lors de son insertion dans la partie de montage, la longueur axiale de la douille (3) correspond à l'épaisseur de la partie de montage (13) entre la surface d'appui (7) et la partie d'assemblage (16) adjointe à l'agencement de montage.

9. Agencement de montage selon l'une des revendications 1 à 8, **caractérisé en ce que** la longueur axiale (L_{Z}) des zones annulaires (15) est plus petite que la longueur axiale (L_{R}) de la bague (2).

10. Agencement de montage selon l'une des revendications 1 à 8, **caractérisé en ce que** la longueur axiale (L_{Z}) des zones annulaires (12) est plus grande que la longueur axiale (L_{R}) de la bague (2).

11. Agencement de montage selon la revendication 10, **caractérisé en ce que** la longueur axiale (L_{Z}) des zones annulaires (12) correspond à quatre tiers de la longueur axiale (L_{R}) de la bague (2).

12. Agencement de montage selon l'une des revendications 1 à 11, **caractérisé en ce que** le diamètre (D_{Z}) des zones annulaires (12, 15) correspond à onze dixièmes du diamètre extérieur (D_{R}) de la bague (2) insérée dans la rainure annulaire (8).

13. Agencement de montage selon l'une des revendications 1 à 12, **caractérisé en ce que** le diamètre du fond de la rainure (D_{N}) de la rainure annulaire (8) est plus grand que le diamètre intérieur (D_{RI}) de la bague (2) sans tension non montée, de sorte que la bague (2) insérée dans la rainure annulaire (8) est élargie constamment de façon élastique sous l'effet de la tension.

14. Agencement de montage selon la revendication 13, **caractérisé en ce que** le diamètre du fond de la rainure (D_{N}) de la rainure annulaire (8) correspond à neuf huitièmes du diamètre intérieur (D_{RI}) de la bague (2) sans tension non montée.

15. Agencement de montage selon l'une des revendications 1 à 14, **caractérisé en ce que** la bague (2) est une bague d'étanchéité circulaire.
